# EUROPÄISCHE PATENTSCHRIFT

(11) **EP 3 392 676 B1**
(45) Veröffentlichungstag und Bekanntmachung des Hinweises auf die Patenterteilung: **01.07.2020**
(21) Anmeldenummer: 17166904.7
(22) Anmeldetag: 18.04.2017
(51) Int. Cl.: G01S 17/42, G01S 7/48, G01S 7/486

(54) **OPTOELEKTRONISCHE SENSOREINRICHTUNG UND VERFARHEN ZU DEREN KONTROLLE**
OPTOELECTRONIC SENSOR DEVICE AND METHOD FOR CONTROLLING THE SAME
DISPOSITIF DE DÉTECTION OPTOÉLECTRIQUE ET SON PROCÉDÉ DE COMMANDE

(43) Veröffentlichungstag der Anmeldung: 24.10.2018
(73) Patentinhaber: Espros Photonics AG, 7320 Sargans (CH); Valeo Schalter und Sensoren GmbH, 74321 Bietigheim-Bissingen (DE)
(72) Erfinder: De Coi, Beat, 7304 Maienfeld (CH); Simon, Jan, 74321 Bietigheim-Bissingen (DE); Schuler, Thomas, 74321 Bietigheim-Bissingen (DE); Horvath, Peter, 74321 Bietigheim-Bissingen (DE)
(74) Vertreter: Otten, Roth, Dobler & Partner mbB Patentanwälte

(56) Entgegenhaltungen:
- EP-A1- 1 879 044
- EP-A2- 1 795 913
- WO-A1-2016/128198
- US-A1- 2002 011 642
- US-A1- 2012 261 516

## Beschreibung

Die Erfindung betrifft eine optoelektronische Sensoreinrichtung zur Erfassung eines Objekts innerhalb eines Überwachungsbereichs nach dem Oberbegriff des Anspruchs 1 sowie ein Verfahren zu deren Kontrolle nach dem Oberbegriff des Anspruchs 10.

In der DE 10 2012 006 869 A1 wird beschrieben, dass nach dem Stand der Technik bei optoelektronischen Sensoreinrichtungen, insbesondere Laserscannern bzw. Lidar-Geräten, Übersteuerungen dadurch vermieden werden können, dass auf die Empfangslinse ein schwarzer Streifen lackiert oder ein lichtundurchlässiges Klebeband aufgeklebt wird, um einen entsprechenden Bereich ausblenden zu können. In diesem Dokument wird darüber hinaus vorgeschlagen, alternativ dazu eine Halteeinrichtung zur Halterung einer für diesen Zweck eigens vorgesehenen Blende einzusetzen.

Die EP 1 879 044 A1 offenbart die Verwendung verschiedener Photodioden mit unterschiedlicher Empfindlichkeit zum Empfang derselben von einem Objekt reflektierten Strahlung, um den Bereich der Lichtempfindlichkeit auszudehnen und ein Über- bzw. Untersteuern der Empfangselemente zu vermeiden.

Die EP 1 795 913 A2 offenbart, ein Objekt mittels zweier Empfangselemente zu scannen. Ein zweites Empfangselement dient dabei als Hilfs-Empfangselement zur Vorschau auf einen Punkt des Objektes, der als nächstes von dem ersten Empfangselement erfasst wird. Mittels der ermittelten Helligkeit kann dann die Lichtempfindlichkeit des ersten Empfangselementes vorausschauend angepasst werden.

Aufgabe der Erfindung ist es, eine optoelektronische Sensoreinrichtung vorschlagen zu können, welche flexibler eingesetzt werden kann.

Die Aufgabe wird, ausgehend von einer optoelektronischen Sensoreinrichtung bzw. einem Kontrollverfahren der eingangs genannten Art, durch die Merkmale der Ansprüche 1 bzw. 8 gelöst.

Durch die in den abhängigen Ansprüchen genannten Maßnahmen sind vorteilhafte Ausführungen und Weiterbildungen der Erfindung möglich.

Die erfindungsgemäße optoelektronische Sensoreinrichtung dient zur Erfassung eines Objekts innerhalb eines Überwachungsbereichs, insbesondere zu dessen Ortung oder zur Entfernungsbestimmung. Grundsätzlich kann es sich bei dieser Sensoreinrichtung um eine Laserscanner-Einrichtung handeln, bei der mithilfe eines Laserstrahls ein Bereich in einem Überwachungsraum oder eine Oberfläche abgerastert wird, um zum Beispiel die Objektgeometrie und/oder die Position des Objekts im Überwachungsraum zu erfassen. Vorzugsweise kann es sich dabei um ein Lidar-System handeln (Lidar: light detection and ranging), welches vor allem zur optischen Entfernungsbestimmung verwendet wird und ebenfalls mit Laserstrahlen arbeitet. Ein solches Lidar-System kann also in Form eines Laserscanners aufgebaut sein. Ein Lidar-System kann ähnlich wie ein Radar-System arbeiten, wobei hier Laserpulse ausgesandt werden, das zurückgestreute Licht detektiert wird und schließlich aus der Lichtlaufzeit der Signale eine Entfernung zum Ort der Streuung bestimmt werden kann. Zumindest umfasst die erfindungsgemäße optoelektronische Sensoreinrichtung eine Empfangseinrichtung zum Empfang des zurückgestreuten Lichts nach Streuung des ausgesandten Lichtstrahls am zu vermessenden Objekt. Die Empfangseinrichtung liegt in Form eines Arrays vor, welches insbesondere als Matrix aus wenigstens zwei Empfangselementen zur Strahlungsdetektion sowie mit einer Empfangsoptik zur Abbildung der empfangenen Strahlung auf dem Array vorliegen kann.

Die erfindungsgemäße Sensoreinrichtung zeichnet sich dadurch aus, dass das Array in wenigstens zwei Array-Bereiche aufteilbar bzw. aufgeteilt ist. Die Array-Bereiche entsprechen gemäß der Abbildung des empfangenen Lichts durch die Empfangsoptik unterschiedlichen Entfernungen bzw. der Streuung an Objekten in unterschiedlichen Positionen aus dem Überwachungsbereich und weisen daher auch, z.B. je nach Entfernung der abgebildeten Objekte, unterschiedliche Helligkeiten der empfangenen Strahlung auf. Insbesondere ist zu erwarten, dass diejenigen Bereiche, in welchen näher an der Empfangseinrichtung gelegene Objekte abgebildet werden, auch heller erscheinen bzw. eine größere Helligkeit aufweisen, da die zurückgestreute Strahlung sich nicht auf einer so großen Kugelfläche um den Streupunkt herum verteilt. In den unterschiedlichen Array-Bereichen sind jeweils einzelne Empfangselemente angeordnet. Die einzelnen Empfangselemente wiederum sind hinsichtlich ihrer Lichtempfindlichkeit einstellbar. Je nachdem, in welchem Array-Bereich sie liegen, werden sie so eingestellt, dass sie zueinander unterschiedliche Lichtempfindlichkeiten aufweisen und mit unterschiedlichen Lichtempfindlichkeiten detektieren.

Durch diese Maßnahme wird ein wesentlich flexiblerer Einsatz bei der erfindungsgemäßen Sensoreinrichtung ermöglicht, weil im Unterschied zum Stand der Technik nicht zwingend ein fest vorgegebener Bereich ausgeblendet werden muss. Darüber hinaus ist die gemäß der Erfindung vorgesehene Ausblendung nicht so aufwendig oder zeitintensiv wie das Aufbringen einer Lackschicht oder eines Klebestreifens auf einer Linse. Auch wenn, wie es alternativ dazu im Stand der Technik vorgesehen ist, eine an einer Haltevorrichtung angebrachte Blende wiederum einfacher gehandhabt werden kann, ist auch diese herkömmliche Maßnahme aus dem Stand der Technik in nachteiliger Weise genauso wenig variabel wie aufgemalte oder aufgeklebte lichtundurchlässige Streifen. Bei einer geänderten Anordnung der Objekte im Überwachungsraum kann es dann nämlich notwendig sein, diese Halterung aufwendig gegen eine neue auszutauschen. Darüber hinaus benötigt sie zusätzlichen Bauraum, was gemäß der Erfindung vermieden werden kann.

Vor allem ist zu erwarten, dass gerade im Nahbereich sehr starke und lichtintensive optische Signale detektiert werden. Sind diese Bereiche jedoch nicht ortsfest, so können sie dementsprechend in unterschiedlichen Bereichen innerhalb des Arrays abgebildet werden. Feste Blenden, wie sie bei herkömmlichen Sensoreinrichtungen aus dem Stand der Technik bekannt sind, würden jedoch dazu führen, dass zum einen dennoch einzelne Empfangselemente übersteuert werden könnten, wenn sich die Einstrahlungsverhältnisse ändern und die nach der Änderung überbelichteten Bereiche nicht von der Blende erfasst und ausgeblendet werden. Zum anderen aber muss in nachteiliger Weise hingenommen werden, dass die nicht mehr überbelichteten, aber dennoch weiterhin ausgeblendeten Bereiche für die sensorische Erfassung nicht mehr zur Verfügung stehen.

Schließlich kann mit der Erfindung der Nachteil behoben werden, dass für jede Mess-Situation eine eigene, daran angepasste und für Veränderungen unflexible Blende hergestellt werden muss. Diese Nachteile können erfindungsgemäß durch die neu erreichte Flexibilität überwunden werden.

Ferner bietet die Erfindung den Vorteil, dass zur Vermeidung von Überbelichtung nicht mehr lediglich zwischen Empfangselementen unterschieden werden muss, welche noch ein Lichtsignal empfangen können, und solchen, die nicht mehr hierzu in der Lage sind, weil sie durch eine Blende verdeckt werden. Kann die Lichtempfindlichkeit variabel eingestellt werden, so können einzelne Empfangselemente dennoch zur Detektion beitragen, d.h. sie werden nicht vollständig ausgeblendet, es erfolgt aber dennoch keine Überbelichtung, weil deren Empfindlichkeit lediglich reduziert ist. Insbesondere wird verhindert, dass das photoinduzierte elektrische Signal in eine Sättigung übergeht.

In vorteilhafter Weise können die Empfangselemente bei einer Ausführungsform als Photodioden ausgebildet sein, um eine präzise und hochdynamische Detektion zu ermöglichen. Ferner kann insbesondere eine Empfangsoptik in Form einer Linse bzw. in Form einer wenigstens eine Linse umfassenden Optik vorgesehen sein. Hierdurch kann auch eine Anpassung an die zu erwartenden Entfernungen der Objekte sowie eine präzise Abbildung auf dem Array ermöglicht werden.

Bei vorteilhaften Weiterbildungen der Erfindung kann die Lichtempfindlichkeit jeweils auf unterschiedliche Weise eingestellt werden:
Grundsätzlich wird das durch die Empfangseinrichtung detektiert Licht in ein elektrisches Signal umgewandelt. Dieses Signal durchläuft im Allgemeinen eine Signalkette innerhalb der Schaltung der optoelektronischen Sensoreinrichtung. Auf diesem Weg durch die Signalkette kann das Signal in unterschiedlicher Weise verstärkt werden. Um also die Lichtempfindlichkeit einstellen zu können, kann der hierfür vorgesehene Signalverstärker einstellbar ausgebildet sein. Je nach detektierter Helligkeit kann also eine höhere oder niedrigere Verstärkung eingestellt werden, wobei die Verstärkung für jedes einzelne der Empfangselemente wiederum regelbar ist, damit auch diese Einstellung an die unterschiedlichen Helligkeitsbereiche innerhalb des Arrays angepasst werden kann. Wird der Verstärkungsgrad für einzelne Empfangselemente wiederum vergleichsweise niedrig gewählt, so entspricht dies einer Ausblendung in diesem Bereich. Eine vollständige Ausblendung kann im Idealfall dadurch erfolgen, dass das Signal nicht mehr verstärkt bzw. sogar vollständig unterdrückt wird.

Die Empfangselemente können bei einer Ausführungsform der Erfindung so ausgebildet sein, dass zunächst eine Umwandlung des detektieren Lichtsignals bzw. der detektieren Photonen in photoinduzierte Ladungsträger erfolgt, was insbesondere in einem gemäß einer Diodenstruktur ausgebildeten Halbleiterbereich erfolgen kann. Diese photoinduzierten Ladungsträger können zum Beispiel in einem sogenannten Storage-Gate-Bereich gesammelt und dann zu einer Floating-Diffusion übergeleitet werden, wobei diese beiden Bereiche durch ein sogenanntes Transfer-Gate getrennt werden können. Ein Transfer-Gate kann durch eine Potentialbarriere zwischen beiden Bereichen, dem Storage-Gate und der Floating-Diffusion realisiert werden. Zur Überleitung vom Storage-Gate zur Floating-Diffusion erfolgt oftmals entweder über eine Änderung des Potentialniveaus des Storage-Gates und/oder über eine Änderung der Höhe der Potentialbarriere am Transfer-Gate. In der Floating-Diffusion werden die photoinduzierten Ladungsträger in eine Spannung umgewandelt. Diese Spannung wird als weiteres Signal verarbeitet. Dementsprechend kann die Umwandlung der Ladungsträger in eine Spannung durch Einstellung der Höhe der erzeugten Spannung dazu dienen, die Lichtempfindlichkeit des Empfangselements einzustellen.

Grundsätzlich kann die Conversion-Gain zur Einstellung der Lichtempfindlichkeit verändert werden, d.h. es ist bei einem Umwandlungsprozess eine bestimmte Anzahl an Kanälen vorgesehen, wobei die Zahl der verwendeten Kanäle eingestellt werden kann. Dies kann grundsätzlich bei der Umwandlung der Photonen in Ladungsträger oder bei der Umwandlung der photoinduzierten Ladungsträger in eine Spannung (in einen Spannungswert) verwendet werden.

Alle diese Maßnahmen bieten den Vorteil, dass unmittelbar das erzeugte und weiterverarbeitete Signal zur Einstellung der Lichtempfindlichkeit beeinflusst wird. Zudem können ein Signalverstärker, die Floating-Diffusion bzw. die Conversion-Gain in einfacher Weise elektronisch verändert werden, sodass auch eine automatische Anpassung der Lichtempfindlichkeit ermöglicht wird.

Eine automatische Anpassung ermöglicht es also, je nach Situation zu überprüfen, welche Empfangselemente überbelichtet werden oder ob die Gefahr besteht, dass einzelne Empfangselemente überbelichtet werden, und dementsprechend deren Lichtempfindlichkeit herabzusetzen oder diese Empfangselemente sogar vollständig abzuschalten. Eine solche Überbelichtung kann beispielsweise im Nahfeldbereich hervorgerufen werden, wenn sehr nahe an der Empfangseinrichtung gelegene Gegenstände Licht mit hoher Lichtintensität zurückreflektieren bzw. zurückstreuen. Um diese automatische Anpassung in vorteilhafter Weise vornehmen zu können, kann in vorteilhafter Weise eine Kontrolleinrichtung verwendet werden, die dementsprechend eine Kontrolle, d.h. eine Steuerung und/oder Regelung der Lichtempfindlichkeit der Empfangselemente vornimmt und/oder die Einteilung des Arrays in die einzelnen Array-Bereiche durchführt. Durch eine derartige Kontrolleinrichtung ist es nicht mehr notwendig, sich vorab zu entscheiden, welche Bereiche gegebenenfalls überbelichtet werden können, wodurch die Vorrichtung auch nur noch für einen speziellen, vorgegebenen Überwachungsbereich einsetzbar ist. Stattdessen sorgt die Sensoreinrichtung automatisch dafür, dass eine solche Überbelichtung nicht zustande kommt.

Wie bereits dargestellt, wird ferner ermöglicht, dass einzelne Bereiche nicht ausgeblendet werden, sondern dass lediglich die Lichtempfindlichkeit herabgesetzt wird, um die entsprechenden Bereiche zu schützen und eine bessere Qualität des Ausgangssignals bzw. des Ausgangsbildes der Sensoreinrichtung zu erreichen.

Um die entsprechende Kontrolle, d.h. die Steuerung und/oder Regelung durchführen zu können, kann die Kontrolleinrichtung bei einer Ausführungsvariante der Erfindung dazu ausgebildet sein, die Helligkeiten der jeweiligen Empfangselemente zu erfassen. Dementsprechend kann die Anpassung der Lichtempfindlichkeit in vorteilhafter Weise sehr präzise erfolgen, und zwar je nachdem, wie hell ein einzelnes Empfangselement belichtet wird. Zudem wird eine dynamische Anpassung der Lichtempfindlichkeit ermöglicht, wenn die Kontrolleinrichtung darauf reagiert, wie sich die Beleuchtungsverhältnisse der Empfangselemente im Laufe der Überwachung ändern. Die Lichtempfindlichkeit kann grundsätzlich, jedoch Ausführungsform der Erfindung, in Stufen oder kontinuierlich/stufenlos geändert werden. Ist die Helligkeit, die beim Empfangselemente ankommt, zu groß, kann die Kontrolleinrichtung auch eine Abschaltung des jeweiligen Empfangselements bzw. eine Herabsetzung der Lichtempfindlichkeit auf eine völlige Lichtunempfindlichkeit veranlassen.

Bei der Ausführungsform der Erfindung ist in vorteilhafter Weise ein zweidimensionales Array als Anordnung von Empfangselementen vorgesehen. Die Empfangselemente sind also beispielsweise in einer 2-dimensionalen Matrix angeordnet, und die vorgegebene Empfangsoptik sorgt dafür, dass die detektieren Objekte je nach ihrer Position im Raum auf unterschiedliche Bereiche innerhalb dieser 2-dimensionalen Matrix abgebildet werden. Bei einer besonders bevorzugten Weiterbildung der Erfindung kann dieses Array als 3D-Imager fungieren, d.h. die einzelnen Empfangselemente sind jeweils dazu ausgebildet, zusätzlich noch eine Distanz zu messen, also eine Information über die Entfernung der detektieren Objekte zu bestimmen.

Grundsätzlich ist es denkbar, dass bei einem Ausführungsbeispiel der Erfindung die Sensoreinrichtung lediglich ein Empfangseinrichtung umfasst und die Sendeeinrichtung, von der das ausgesandte Licht stammt, welches an Objekten im Raum reflektiert bzw. gestreut werden soll, als separate Vorrichtung vorgesehen ist. Bei der bevorzugten Weiterbildung der Erfindung umfasst jedoch die Sensoreinrichtung auch eine Sendeeinrichtung zur Aussendung von Strahlung. Werden zum Beispiel Time-of-flight-Methoden (TOF-Methoden) angewandt, oder werden in sonstiger Weise Lichtlaufzeiten bestimmt, so ist es notwendig, eine Information über die Eigenschaften des ausgesandten Lichts zu kennen, um bei Empfang von Licht in der Empfangseinrichtung eine entsprechende zeitliche Korrelation zwischen ausgesandten und empfangenen Signal herstellen zu können. Beispielsweise ist es notwendig, Phaseneigenschaften aufmodulierter Anteile des Signals zu kennen, um eine entsprechende Phasenverschiebung ableiten zu können, aus der sodann die Lichtlaufzeit bestimmbar ist.

Bei einer besonders bevorzugten Ausführungsform der Erfindung geschieht diese Laufzeitbestimmung im Rahmen einer Abtastung des Überwachungsbereichs. Es werden also einzelne Punkte im Raum bzw. im Überwachungsbereich nacheinander abgetastet bzw. mit einem Lichtstrahl (in der Regel: ein Laserstrahl mit definierten Phaseneigenschaften) gescannt. Auf diese Weise wird der gesamte Überwachungsbereich zwar nicht simultan erfasst, diese Methodik vereinfacht jedoch die Laufzeitbestimmung, da zu jedem Zeitpunkt Klarheit herrscht, in welche Richtung der ausgesandte Lichtstrahl gerichtet war, d.h. von welchen Punkten im Raum eine Information über etwaige Objekte darin erwartet werden kann.

Dementsprechend zeichnet sich ein erfindungsgemäßes Kontrollverfahren einer optischen Sensoreinrichtung dadurch aus, dass das Array in wenigstens zwei Array-Bereiche aufgeteilt wird, wobei die Array-Bereiche jeweils Streuungen an Objekten in unterschiedlichen Entfernungen aus dem Überwachungsbereich und/oder unterschiedlichen Helligkeiten entsprechen und wobei die Empfangselemente je nach ihrer Lage in den jeweiligen Array-Bereichen in Bezug auf ihre Lichtempfindlichkeit jeweils eingestellt werden. Durch dieses Kontrollverfahren können die erfindungsgemäßen Vorteile erreicht werden, d.h. es wird insbesondere ein höheres Maß an Flexibilität beim Einsatz der Sensoreinrichtung erreicht, weil sogar dynamische Anpassungen an sich ändernde Helligkeiten des empfangenen Lichts möglich sind. Zudem kann der Fertigungsaufwand zum Bau einer entsprechenden Sensoreinrichtung verringert werden, weil zusätzliche Fertigungsschritte wie zum Beispiel der Bau einer Halterung mit Blende oder das Auftragen von Lackschichten oder Klebestreifen auf der Empfangsoptik entfallen können. Darüber hinaus kann eine feinere Anpassung an verschiedene Helligkeiten vorgenommen werden, da nicht nur einzelne Bereiche mit Empfangselemente ausgeblendet werden müssen, sondern durch Verringerung der Lichtempfindlichkeit eine Anpassung an geänderte räumliche Helligkeitsverteilungen erfolgen kann, wobei die entsprechenden Empfangselemente auch bei angepasster Lichtempfindlichkeit grundsätzlich immer noch weiterhin detektieren können, solange sie nicht ausgeschaltet bzw. vollständig ausgeblendet wurden.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1:: eine schematische Darstellung des Aufbaus einer optoelektronischen Sensoreinrichtung gem. der Erfindung,
- Figur 2:: eine schematische Darstellung des Aufbaus einer Empfangseinrichtung, sowie
- Figur 3:: eine schematische Darstellung eines Empfangselements der Sensoreinrichtung in Form eines 2-Tap-Demodulationspixels.

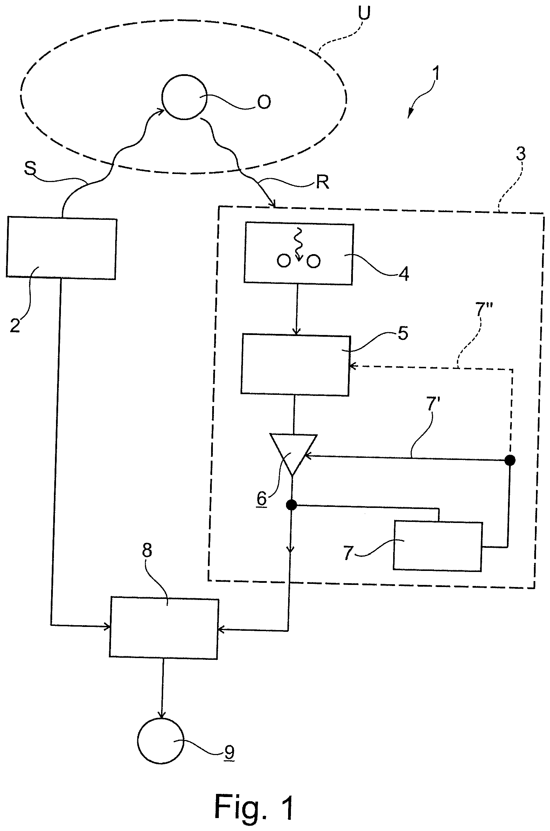

Figur 1 zeigt eine schematische Darstellung einer elektronischen Sensoreinrichtung 1 gemäß der Erfindung, welche wiederum eine Sendeeinrichtung 2 in Form eines Lidar-Laserscanners und eine Empfangseinrichtung 3 aufweist. Der Laserscanner 2 tastet Stück für Stück den Überwachungsbereich U ab, indem er einen Laserstrahl S nacheinander in alle dafür vorgesehenen Raumbereiche abstrahlt. In Figur 1 trifft der Laserstrahl S auf ein Objekt O und wird daran gestreut. Einer der reflektierten Strahlen R gelangt zur Empfangseinrichtung 3 und wird dort im Detektionsbereich 4 aufgenommen, sodass dort eine Auftrennung von Ladungsträgerpaaren erfolgen kann. Die photoinduzierten Ladungsträger werden zunächst gesammelt und an eine Floating-Diffusion 5 übergeben. Mittels der Floating-Diffusion 5 werden die photoinduzierten Ladungsträgermengen in eine Spannung konvertiert. Das so erzeugte Signal kann in einem Verstärker 6 verstärkt werden, welcher von einer Kontrolleinrichtung 7 überwacht. Dazu misst die Kontrolleinrichtung 7 die Höhe des Signals und somit die Helligkeit des detektieren Lichtsignals. Dementsprechend ist die Kontrolleinrichtung 7 über die Leitung 7' mit dem Verstärker 6 oder die Leitung 7"mit der Floating-Diffusion 5 verbunden und kann somit entweder über die Leitung 7' die Verstärkung am Verstärker 6 oder aber die Anzahl der Kanäle (Conversion-Gain) an der Floating Diffusion 5 über die Leitung 7" regulieren. Ist die Helligkeit zu groß, so kann die Lichtempfindlichkeit herabgesetzt werden, indem die Verstärkung bzw. die Conversion-Gain herabgesetzt wird. Das Ausgangssignal der Empfangseinrichtung 3 wird einschließlich des Signals oder zumindest eines Modulationssignals der Sendeeinrichtung 2 an eine Auswerteeinrichtung 8 übergeben. Als Endergebnis 9 stehen sodann eine Phaseninformation und/oder ein Bildpunkt oder dergleichen am Ausgang zur Verfügung.

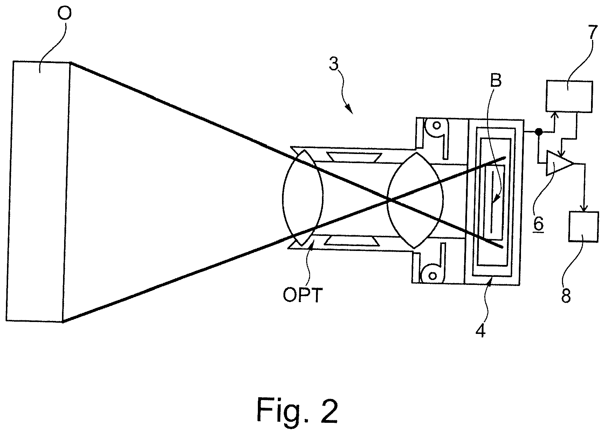

Figur 2 wiederum zeigt eine Darstellung der Empfangseinrichtung 3, wobei der Bereich 4 als Matrix-Array eines 3D-Imagers dargestellt ist. Das Objekt O wird über eine Empfangsoptik OPT mit Linsen auf dem Array 4 abgebildet. Schematisch ist weiterhin dargestellt, dass die von dem Array 4 erzeugten Signale von der Kontrolleinheit 7 bezüglich ihrer Intensität überwacht werden und anschließend durch den Verstärker 6 verstärkt werden. Die Verstärkung des Verstärkers 6 wird wiederum durch die Kontrolleinrichtung 7 kontrolliert. Im Unterschied zu Figur 1 greift die Kontrolleinrichtung 7 unmittelbar das Signal vor seiner Verstärkung durch den Verstärker 6 ab und überwacht dieses. Das Ausgangssignal wird sodann an eine Auswerteeinrichtung 8 übergeben. Beispielhaft ist hier, genau wie in Figur 1, lediglich ein Ausgang eines Empfangselements der Matrix 4 dargestellt, da die Ausgänge aller Empfangselemente einzeln von der Kontrolleinrichtung 7 überwacht werden.

Der vollständig ausgeblendete Bereich ist mit dem Bezugszeichen B gekennzeichnet. Dieser Bereich wäre ansonsten überbelichtet, weswegen die Kontrolleinheit 7 die Lichtempfindlichkeit vollständig herabsetzt und die entsprechenden Empfangselemente praktisch ausschaltet.

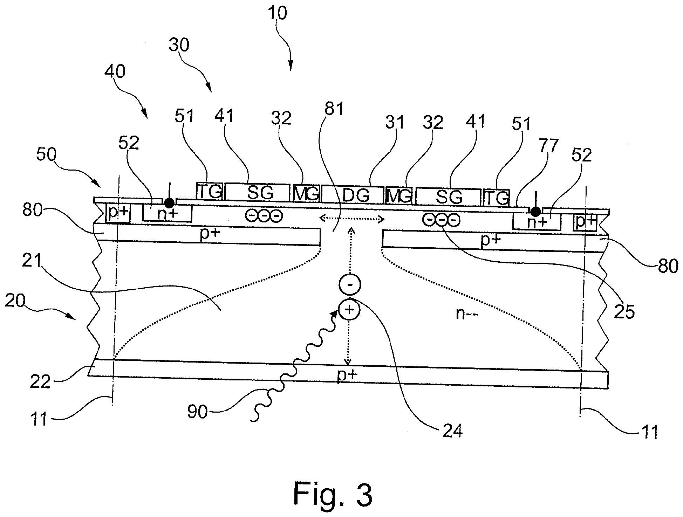

In Figur 3 ist als Beispiel eines Empfangselements ein 2-Tap-Demodulationspixel schematisch gezeigt und erläutert. Das Pixel 10 des Sensors weist ein etwa 50 Mikrometer dickes, n-dotiertes Float-Zone-Silizium-Halbleitersubstrat 21 auf, mit einem spezifischen elektrischen Flächenwiderstand von größer oder gleich 2000 Ohm cm. Die seitlichen Grenzen sind mit dem Bezugszeichen 11 markiert. An der Oberfläche des Halbleitersubstrats sind oberhalb einer nicht-leitenden SiO-Trennschicht 77 auf dem Substrat ein Driftgate 31 und jeweils beidseitig in symmetrischer Anordnung und jeweils zueinander mit Abstand ein Modulationsgate 32, ein Storagegate 41, ein Transfergate 51 sowie innerhalb des Substrats eine Floating-Diffusion 52 angeordnet.

Die zugehörigen Layer und Kontakte sind nicht im Einzelnen dargestellt. Eine Blende 80 ist zwischen den Gates und dem transparenten Rückseitenkontakt angeordnet und schattet die Storagegates, Transfergates und die Floating-Diffusion samt dem unter den jeweiligen Gates liegenden Halbleitersubstrat gegenüber der einfallenden reflektierten bzw. rückgestreuten Strahlung 90 ab, wobei die Blende eine Blendenöffnung 81 im Bereich unterhalb des Driftgates aufweist. Das Halbleitersubstrat ist mindestens unter dem Driftgate, insbesondere insgesamt verarmt. Das Driftgate ist mit positivem Potential beaufschlagt und bildet im Halbleitersubstrat eine Raumladungszone aus.

Die Trenneinrichtung 30 umfasst das Driftgate 31 und die Modulationsgates 32. Die Speichereinrichtung 40 umfasst die die Storagegates 41; die Ausleseeinrichtung 50 umfasst die Transfergates 51, die Trennschicht 77, die Floating-Diffusions 52, die Blende 80, die Blendenöffnung 81 sowie das zwischen Blende und den Gates befindliche Substrat, das von gleicher Art ist wie das Halbleitersubstrat 21 im Umwandlungsbereich 20. Der Umwandlungsbereich 20 umfasst das Halbleitersubstrat 21, die Rückseitenelektrode 22, und die Blende 80. Das Substrat weist eine Dicke von etwa 50 Mikrometer auf.

Die über die transparente Rückseitenelektrode 22 in das Halbleitersubstrat 21 unter dem Driftgate eindringende reflektierte IR-Strahlung 90 (IR: Infrarot) induziert im Halbleitersubstrat Elektronen-Loch-Paare 24. Die Photoelektronen werden durch die vom Driftgate 31 ausgebildete Raumladungszone zum Driftgate hin angezogen.

Das Driftgate weist ein Potential von etwa 4 V auf. Die Anzahl der angezogenen Photoelektronen 25 ist proportional zur empfangenen Strahlungsintensität.

Die Modulationsgates 32 können mit einem modulierten Potential beaufschlagt sein, dessen Maximum zwischen den Potentialen des Driftgates 31 und des Storagegates 41 liegt und dessen Minimum unter dem des Driftgates 31 liegt. Das Potential des Modulationsgates moduliert etwa zwischen den Werten 0 V und 5 V.

Die beiden Modulationsgates sind zueinander mit inversen Potentialen betrieben, d.h. das Potential des einen Modulationsgates beträgt 0 V, wenn das des anderen positiv ist und umgekehrt. Dann liegt stets das eine Modulationsgate auf 0 V und das andere Modulationsgate auf 5 V.

Ein Potentialminimum, hier also 0 V, führt zu einer Potentialbarriere für die Photoelektronen unter dem Driftgate, sodass keine Photoelektronen zu dem diesem Modulationsgate zugeordneten Storagegate gelangen können. Ein Potentialmaximum, hier also 5 V, führt zu einem Abfluss der Photoelektronen unter dem Driftgate an diesem Modulationsgate vorbei in dessen zugeordnetes Storagegate.

Durch die Beaufschlagung der beiden Modulationsgates mit jeweils einem Potential, das jeweils zueinander inversen Signalen entspricht, wird der Fluss der durch die empfangene Strahlungsintensität erzeugten Photoelektronen entsprechend einer Weiche gelenkt. Der so entstehende Fluss dieser Photoelektronen unter den Modulationsgates entspricht einer Multiplikation, d.h. einer Korrelation der entsprechenden Sinus-Signale oder Rechtecksignale mit dem empfangenen Strahlungssignal.

Die Storagegates sind mit einem höheren Potential als das Driftgate beaufschlagt und sammeln die Photoelektronen entsprechend dem Status der Modulationsgates wechselseitig unter sich. Die Storagegates haben etwa das Potential 10 V. Die unter den Storagegates durch die hotoelektronen angesammelten Ladungen entsprechen den Korrelationswerten. Die Korrelationswerte liegen somit in der Ladungsdomäne vor. Die Ansammlung der Photoelektronen unter den entsprechenden Storagegates entspricht einer zeitlichen Integration der oben erwähnten Korrelation von Korrelationssignal und empfangenen Strahlungssignal.

Zur Detektion der unter den Storagegates angesammelten Photoelektronen wird zum einen das Potential der Modulationsgates auf 0 V gelegt, um eine Potentialbarriere für die Photoelektronen in Richtung Driftgate zu bilden. Zum anderen wird das Potential der Transfergates auf einen mittleren Wert angehoben, beispielsweise 6 V, um einen bedingten Abfluss der Photoelektronen in Richtung der entsprechenden Floating-Diffusions zu ermöglichen.

Nun wird das positive Potential beider Storagegates von etwa 10 V mittels einer Zeitrampe parallel abgesenkt. Das sich dabei verändernde addierte Potential aus dem sinkenden an die Storage-Gates angelegten positiven Potential und dem negativen Potential der darunter befindlichen Ladung bestimmt, ob Ladung über die Transfergates abfliessen kann. Der Absenkprozess teilt sich dabei in drei Phasen ein. In einer ersten Phase der Zeitrampe ist das genannte addierte Potential noch für beide Storagegates positiver als das konstant und gleich positive Potential der Transfergates, und es fließt keine Ladung ab. In einer sich anschließenden zweiten Phase der Zeitrampe ist das genannte addierte Potential für ein Storagegate positiver und für das andere Storagegate negativer als das konstante und gleich positive Potential der Transfergates. Dadurch fließt Ladung unter dem Storagegate mit dem positiveren addierten Potential über das zugeordnete Transfergate in die zugeordnete Floating-Diffusion ab, sodass das addierte Potential wieder gleich dem Potential des entsprechenden Transfergates ist. In einer abschliessenden dritten Phase der Zeitrampe sind die genannten addierten Potentiale beider Storagegates höher als die konstant gleichen Potentiale. Dadurch fließen unter beiden Storagegates Ladungen über das jeweils zugeordnete Transfergate in die jeweils zugeordnete Floating Diffusion ab.

Die Ladungsmenge der einen geladenen Floating-Diffusion wird nun mittels Source-Follower in eine entsprechende Spannung gewandelt und weiter verarbeitet.

Allen Ausführungsbeispielen und Weiterbildungen der Erfindung ist jedoch gemeinsam, dass das Array in wenigstens zwei Array-Bereiche aufteilbar und/oder aufgeteilt ist, wobei die wenigstens zwei Array-Bereiche jeweils Streuungen an Objekten in unterschiedlichen Entfernungen aus dem Überwachungsbereich und/oder unterschiedlichen Helligkeiten der empfangenen Strahlung entsprechen, und die Empfangselemente, die jeweils in unterschiedlichen Array-Bereichen angeordnet sind, einstellbar und/oder eingestellt sind, mit zueinander unterschiedlichen Lichtempfindlichkeiten zu detektieren.

### Bezugszeichenliste:

- 1: optoelektronische Sensoreinrichtung
- 2: Laserscanner
- 3: Empfangseinrichtung
- 4: Array / Empfangselemente
- 5: Floating Diffusion
- 6: Signalverstärker
- 7: Kontrolleinrichtung
- 7`: Leitung zum Verstärker
- 7": Leitung zur Floating-Diffusion
- 8: Auswerteeinrichtung
- 9: Ausgangssignal
- 10: Empfangselement / Sensorpixel
- 11: Grenze
- 20: Umwandlungsbereich
- 21: Halbleitersubstrat
- 22: Rückseitenelektrode
- 24: Elektronen-Loch-Paare
- 25: Photo-Elektronen
- 30: Trenneinrichtung
- 31: Driftgate
- 32: Modulationsgate
- 40: Speichereinrichtung
- 41: Storagegate
- 50: Ausleseeinrichtung
- 51: Transfergate
- 52: Floating-Diffusion
- 77: Trennschicht
- 80: Blende
- 81: Blendenöffnung
- 90: Einfallende Strahlung

- B: ausgeblendeter Array-Bereich
- O: Objekt
- U: Überwachungsbereich
- R: rückgestreutes Licht
- S: ausgesandtes Licht
- OPT: Empfangsoptik

## Patentansprüche

1. Optoelektronische Sensoreinrichtung (1) zur Erfassung eines Objekts (O) innerhalb eines Überwachungsbereichs (U), insbesondere zur Ortung und/oder Entfernungsbestimmung, vorzugsweise Laserscanner-Einrichtung und/oder LiDAR-Gerät, umfassend eine Empfangseinrichtung (4) zum Empfang von nach Streuung eines ausgesendeten Lichtstrahls (S) am Objekt zurückgestreutem Licht (R), wobei die Empfangseinrichtung (4) ein Array, nämlich eine Matrix aus wenigstens zwei Empfangselementen (10) zur Strahlungsdetektion und eine Empfangsoptik (OPT) zur Abbildung der empfangenen Strahlung auf dem Array (4) aufweist, wobei das Array (4) in wenigstens zwei Array-Bereiche aufteilbar und/oder aufgeteilt ist, wobei die wenigstens zwei Array-Bereiche jeweils Streuungen an Objekten in unterschiedlichen Entfernungen aus dem Überwachungsbereich (U) und unterschiedlichen Helligkeiten der empfangenen Strahlung entsprechen, und die Empfangselemente (10), die jeweils in unterschiedlichen Array-Bereichen angeordnet sind, einstellbar und/oder eingestellt sind, mit zueinander unterschiedlichen Lichtempfindlichkeiten zu detektieren, wobei eine Kontrolleinrichtung (7) zur Kontrolle der Lichtempfindlichkeiten der Empfangselemente (10) und zur Einteilung des Array (4) in die Array-Bereiche vorgesehen ist, die weiterhin dazu ausgebildet ist, anhand der von den Empfangselementen (10) aufgenommenen Helligkeiten deren Lichtempfindlichkeiten einzustellen, insbesondere bis hin dazu, wenigstens eines der Empfangselemente (10, B) abzuschalten.

2. Sensoreinrichtung (1) nach Anspruch 1, wobei die Empfangselemente (10) als Photodioden ausgebildet sind und/oder die Empfangsoptik (OPT) als Linse ausgebildet ist und/oder die Empfangsoptik (OPT) eine Linse umfasst.

3. Sensoreinrichtung (1) nach einem der vorgenannten Ansprüche, wobei die Empfangseinrichtung (4) einen hinsichtlich der Verstärkung einstellbaren Signalverstärker (6) zur Verstärkung des in elektrische Ladungsträger und/oder eine Spannung umgewandelten empfangenen Lichts umfasst, um die Lichtempfindlichkeit einzustellen.

4. Sensoreinrichtung (1) nach einem der vorgenannten Ansprüche, wobei eine Floating-Diffusion (5, 52) vorgesehen ist, um die photoinduzierten Ladungsträger zu sammeln und in eine Spannung umzuwandeln, wobei die Floating-Diffusion (5, 52) in Bezug auf die Höhe der Spannung, in welche die photoinduzierte Ladungsträgermenge umgewandelt wird, einstellbar ausgebildet ist, um die Lichtempfindlichkeit einzustellen.

5. Sensoreinrichtung (1) nach einem der vorgenannten Ansprüche, wobei die Empfangseinrichtung (4) dazu ausgebildet ist, die Zahl der Kanäle zur Umwandlung von Licht in elektrische Ladungsträger und/oder die Zahl der Kanäle der Floating-Diffusion (5, 52) zur Umwandlung der photoinduzierten Ladungsträger in eine Spannung einzustellen, sodass die Lichtempfindlichkeit durch Einstellung des Conversion-Gain veränderbar ist.

6. Sensoreinrichtung (1) nach einem der vorgenannten Ansprüche, wobei Array (4) als zweidimensionales Array, insbesondere als 3D-Imager ausgebildet ist.

7. Sensoreinrichtung (1) nach einem der vorgenannten Ansprüche, wobei eine Sendeeinrichtung (2) zur Aussendung von Strahlung, insbesondere zum Abtasten des Überwachungsbereichs vorgesehen ist.

8. Verfahren zur Kontrolle einer optoelektronischen Sensoreinrichtung (1), umfassend:
• Verwendung einer optoelektronischen Sensoreinrichtung (1) zur Erfassung eines Objekts (O) innerhalb eines Überwachungsbereichs (U), insbesondere zur Ortung und/oder Entfernungsbestimmung, vorzugsweise eines Laserscanners und/oder LiDAR-Geräts, mit einer Empfangseinrichtung (4) zum Empfang von nach Streuung eines ausgesendeten Lichtstrahls (S) am Objekt (O) zurückgestreutem Licht (R), wobei die Empfangseinrichtung (4) ein Array, nämlich eine Matrix aus wenigstens zwei Empfangselementen (10) zur Strahlungsdetektion und eine Empfangsoptik (OPT) zur Abbildung der empfangenen Strahlung auf dem Array aufweist, wobei
• das Array (4) in wenigstens zwei Array-Bereiche aufgeteilt wird, wobei die wenigstens zwei Array-Bereiche jeweils Streuungen an Objekten in unterschiedlichen Entfernungen aus dem Überwachungsbereich (U) und unterschiedlichen Helligkeiten der empfangenen Strahlung entsprechen, und
• die Empfangselemente (10) je nach ihrer Lage in den jeweiligen Array-Bereichen in Bezug auf ihre Lichtempfindlichkeit eingestellt werden, wobei vor der Einstellung der Lichtempfindlichkeit der Empfangselemente (10) eine Helligkeitsmessung der von den einzelnen Empfangselementen (19) empfangenen Strahlung (R) vorgenommen wird.

9. Verfahren nach Anspruch 8, wobei die einzelnen Array-Bereiche jeweils nach Entfernungen der Objekte eingeteilt werden, an denen die ausgesandte Strahlung (S) im Überwachungsbereich (U) gestreut wird.

10. Verfahren nach Anspruch 8 oder 9, wobei die Lichtempfindlichkeit dadurch eingestellt wird, dass:
• die Signalverstärkung des Signals, das durch in elektrische Ladungsträger und/oder in eine Spannung umgewandeltes empfangenes Licht hervorgerufen wird, und/oder
• die Höhe der Spannung, in welche die photoinduzierte Ladungsträgermenge durch die Floating-Diffusion (5, 52) umgewandelt wird, eingestellt wird und/oder
• die Zahl der Kanäle zur Umwandlung von Licht in elektrische Ladungsträger und/oder die Zahl der Kanäle der Floating-Diffusion (5, 52) zur Umwandlung der photoinduzierten Ladungsträger in eine Spannung eingestellt wird.

## Claims

1. An optoelectronic sensor device (1) for detecting an object (O) within a monitoring area (U), in particular for locating and/or determining distance, preferably a laser scanner device and/or LiDAR device, comprising a receiving device (4) for receiving backscattered light (R) after scattering an emitted light beam (S) on the object, wherein the receiving device (4) comprises an array, namely a matrix of at least two receiving elements (10) for radiation detection and a receiving optics (OPT) for imaging the received radiation on the array (4), wherein the array (4) can be and/or is divided into at least two array areas, wherein the at least two array areas each correspond to scattering of objects at different distances from the monitoring area (U) and different brightnesses of the received radiation, and the receiving elements (10), each arranged in different array areas can be and/or are adjusted to be detected with mutually different light sensitivities, wherein a control device (7) is provided for controlling the light sensitivities of the receiving elements (10) and for dividing the array (4) into the array regions, which is furthermore designed for adjusting the light sensitivities on the basis of the brightnesses recorded by the receiving elements (10), in particular for switching off at least one of the receiving elements (10, B).

2. The sensor device (1) according to claim 1, wherein the receiving elements (10) are designed as photodiodes and/or the receiving optics (OPT) is designed as a lens and/or the receiving optics (OPT) comprises a lens.

3. The sensor device (1) according to any one of the preceding claims, wherein the receiving device (4) comprises a signal amplifier (6) which can be adjusted with regard to the amplification to amplify the received light converted into electrical charge carriers and/or a voltage to adjust the light sensitivity.

4. The sensor device (1) according to any one of the preceding claims, wherein a floating diffusion (5, 52) is provided to collect the photo-induced charge carriers and convert them into a voltage, wherein the floating diffusion (5, 52) is designed to be adjustable to adjust the light sensitivity with regard to the magnitude of the voltage into which the photo-induced charge carrier quantity is converted.

5. The sensor device (1) according to any one of the preceding claims, wherein the receiving device (4) is designed to determine the number of channels to convert light into electrical charge carriers and/or the number of channels of the floating diffusion (5, 52) to adjust to convert the photo-induced charge carriers into a voltage so that the light sensitivity can be changed by adjusting the conversion gain.

6. The sensor device (1) according to any one of the preceding claims, wherein the array (4) is designed as a two-dimensional array, in particular as a 3D imager.

7. The sensor device (1) according to any one of the preceding claims, wherein a transmitting device (2) is provided for emitting radiation, in particular for scanning the monitoring area.

8. A method for controlling an optoelectronic sensor device (1), comprising:
• use of an optoelectronic sensor device (1) for detecting an object (O) within a monitoring area (U), in particular for locating and/or determining distance, preferably a laser scanner and/or LiDAR device, with a receiving device (4) for receiving backscattered light (R) after scattering a transmitted light beam (S) on the object (O), wherein the receiving device (4) is an array, namely comprising a matrix of at least two receiving elements (10) for radiation detection and a receiving optics (OPT) for imaging the received radiation on the array,
wherein
• the array (4) is divided into at least two array areas, wherein the at least two array areas each correspond to scattering on objects at different distances from the monitoring area (U) and to different brightnesses of the received radiation, and
• depending on the position thereof, the receiving elements (10) in the respective array areas are adjusted with regard to the light sensitivity thereof, wherein before the light sensitivity of the receiving elements (10) is adjusted, a brightness measurement of the radiation (R) received by the individual receiving elements (19) is carried out.

9. The method according to claim 8, wherein the individual array areas are each classified according to the distances of the objects at which the emitted radiation (S) is scattered in the monitoring area (U).

10. The method according to claim 8 or 9, wherein the photosensitivity is adjusted by:
• the signal amplification of the signal caused by received light converted into electrical charge carriers and/or into a voltage, and/or
• the magnitude of the voltage into which the photo-induced charge carrier quantity is converted by the floating diffusion (5, 52), and/or
• the number of channels for converting light into electrical charge carriers and/or the number of channels of the floating diffusion (5, 52) for converting the photo-induced charge carriers into a voltage.

## Revendications

1. Dispositif de détection optoélectrique (1) destiné à la détection d'un objet (O) dans une zone de surveillance (U), en particulier à la localisation et/ou détermination de la distance, de préférence dispositif balayeur laser et/ou appareil LiDAR, comprenant un dispositif récepteur (4) pour recevoir, après diffusion d'un faisceau lumineux (S) émis, une lumière (R) réfléchie sur l'objet, dans lequel le dispositif récepteur (4) comprend un réseau, à savoir une matrice d'au moins deux éléments récepteurs (10) pour détecter un rayonnement, et une optique de réception (OPT) pour imager le rayonnement reçu sur le réseau (4), dans lequel le réseau (4) est divisible et/ou divisé en au moins deux zones de réseau, les au moins deux zones de réseau correspondant respectivement à des diffusions sur des objets à différentes distances de la zone de surveillance (U) et à différentes luminosités du rayonnement reçu, et les éléments récepteurs (10), lesquels sont respectivement disposés dans différentes zones de réseau, sont réglables et/ou réglés pour détecter à des sensibilités à la lumière mutuellement différentes, dans lequel un dispositif de commande (7) commande les sensibilités à la lumière des éléments récepteurs (10) et divise le réseau (4) dans les zones de réseau, et est en outre conçu pour régler, en fonction des luminosités enregistrées par les éléments récepteurs (10), leurs sensibilités à la lumière , en particulier jusqu'à désactiver au moins l'un des éléments récepteurs (10, B).

2. Dispositif de détection (1) selon la revendication 1, dans lequel les éléments de réception (10) sont conçus sous la forme de photodiodes et/ou l'optique de réception (OPT) est conçue sous la forme de lentille et/ou l'optique de réception (OPT) comprend une lentille.

3. Dispositif de détection (1) selon l'une quelconque des revendications précédentes, dans lequel le dispositif récepteur (4) comprend un amplificateur de signal (6) pouvant être réglé par rapport à l'amplification, pour amplifier la lumière reçue convertie en porteurs de charge électrique et/ou en tension, afin de régler la sensibilité à la lumière.

4. Dispositif de détection (1) selon l'une quelconque des revendications précédentes, dans lequel une diffusion flottante (5, 52) collecte les porteurs de charges photo-induits et les convertit en une tension, dans lequel la diffusion flottante (5, 52) est conçue réglable par rapport au niveau de la tension en laquelle la quantité de porteurs de charge photo-induits est convertie, afin de régler la sensibilité à la lumière.

5. Dispositif de détection (1) selon l'une quelconque des revendications précédentes, dans lequel le dispositif récepteur (4) est conçu pour régler le nombre de canaux destinés à la conversion de la lumière en porteurs de charges électriques et/ou le nombre de canaux de la diffusion flottante (5, 52) destinés à la conversion des porteurs de charge photo-induits en une tension, de telle sorte que la sensibilité à la lumière peut être modifiée au moyen du réglage du gain de conversion.

6. Dispositif de détection (1) selon l'une quelconque des revendications précédentes, dans lequel le réseau (4) est conçu sous la forme d'un réseau bidimensionnel, en particulier sous la forme d'un imageur 3D.

7. Dispositif de détection (1) selon l'une quelconque des revendications précédentes, dans lequel un dispositif émetteur (2) émet un rayonnement, en particulier pour balayer la zone de surveillance.

8. Procédé de commande d'un dispositif de détection optoélectrique (1), comprenant :
• l'utilisation d'un dispositif de détection optoélectrique (1) pour détecter un objet (O) dans une zone de surveillance (U), en particulier pour localiser et/ou déterminer une distance, de préférence un balayeur laser et/ou un appareil LiDAR, comportant un dispositif récepteur (4) pour recevoir, après diffusion d'un faisceau lumineux (S) émis, la lumière (R) réfléchie sur l'objet (O), dans lequel le dispositif récepteur (4) comprend un réseau, à savoir une matrice d'au moins deux éléments récepteurs (10) pour détecter le rayonnement, et une optique de réception (OPT) pour imager le rayonnement reçu sur le réseau,
dans lequel
• le réseau (4) est divisé en au moins deux zones de réseau, dans lequel les au moins deux zones de réseau correspondent respectivement à des diffusions sur des objets à différentes distances de la zone de surveillance (U) et à différentes luminosités du rayonnement reçu et
• les éléments récepteurs (10) sont réglés en fonction de leur position dans les zones de réseau respectives en fonction de leur sensibilité à la lumière, dans lequel, avant le réglage de la sensibilité à la lumière des éléments récepteurs (10), une mesure de luminosité du rayonnement (R) reçu par les éléments récepteurs individuels (19) est effectuée.

9. Procédé selon la revendication 8, dans lequel les zones de réseau individuelles sont respectivement divisées selon les distances des objets vers lesquels le rayonnement (S) émis est diffusé dans la zone de surveillance (U).

10. Procédé selon la revendication 8 ou 9, dans lequel la sensibilité à la lumière est réglée de telle sorte que :
• l'amplification de signal du signal, lequel est provoquée par la lumière reçue convertie en porteurs de charge électrique et/ou en tension, est réglée, et/ou
• le niveau de la tension en laquelle la quantité de porteurs de charges photo-induits est convertie par la diffusion flottante (5, 52) est réglé, et/ou
• le nombre de canaux destinés à la conversion de la lumière en porteurs de charges électriques et/ou le nombre de canaux de la diffusion flottante (5, 52) destinés à la conversion des porteurs de charges photo-induits en une tension sont réglés.
